# EUROPEAN PATENT APPLICATION

(11) **EP 4 324 335 A1**
(43) Date of publication of application: **21.02.2024**
(21) Application number: 22771270.0
(22) Date of filing: 10.03.2022
(51) Int. Cl.: A23L 11/00, A23L 29/00

(54) **HEAT-TREATED PRODUCT OF PEA-DERIVED RAW MATERIAL AND FOAMING AGENT HAVING SAME AS ACTIVE INGREDIENT**

(30) Priority: 18.03.2021 JP 2021044499
(71) Applicant: Fuji Oil Holdings Inc., Izumisano-shi, Osaka 598-8540 (JP)
(72) Inventor: FUKUHARA, Hiroaki, Izumisano-shi, Osaka 598-8540 (JP); ASAI, Yuji, Izumisano-shi, Osaka 598-8540 (JP)
(74) Representative: Dennemeyer & Associates S.A.
(86) International application number: PCT/JP2022/010608
(87) International publication number: WO 2022/196519

(57) **Abstract**

An object of the present invention is to provide a material that is allergen-free, has a good flavor, and can provide good foaming properties and foam stability by using a pea-derived raw material. It was found that in the heat-treated product obtained by heat-treating the pea-derived raw material with adjusted crude protein content and sugar content under high temperature acidic conditions, a specific fraction having a weight average molecular weight of 3000 to 15000 when measuring molecular weight distribution at a wavelength of 220 nm by gel filtration HPLC is present in a ratio of a certain amount or more, which imparts good foaming properties, foam stability, and fineness of foam to beverages and the like.

## Description

### TECHNICAL FIELD

The present invention relates to a heat-treated product of pea-derived raw material and a foaming agent having the same as an active ingredient.

### BACKGROUND ART

Foaming properties and foam stability are important for aerated foods and drinks such as meringues and shake beverages, and means for improving the foaming properties and the foam stability have been conventionally studied. For example, a technique using water-soluble hemicellulose as a foaming agent (PATENT LITERATURE 1), a technique using foaming agents such as cyclodextrin and soybean peptide in combination (PATENT LITERATURE 2), a technique using water-soluble soybean polysaccharides as a foam stabilizer in sparkling beverages (PATENT LITERATURE 3), and a technique for obtaining a composite having excellent foaming properties by heat-treating polysaccharides such as pea polysaccharides containing uronic acid as a constituent sugar and protein under acidic conditions (PATENT LITERATURE 4) have been proposed.

In addition, a method of using soybean dietary fiber (PATENT LITERATURE 5) and a method of using water-soluble pea polysaccharides (PATENT LITERATURE 6) have been also proposed to improve foam retention and mouthfeel.

### CITATION LIST

### PATENT LITERATURE

PATENT LITERATURE 1: JP-A-05-244880
PATENT LITERATURE 2: JP-A-49-102870
PATENT LITERATURE 3: WO 2008/069027 A
PATENT LITERATURE 4: WO 2017/022490 A
PATENT LITERATURE 5: JP-A-2013-021944
PATENT LITERATURE 6: JP-A-2014-124119

### SUMMARY OF INVENTION

### PROBLEMS TO BE SOLVED BY INVENTION

The foods and drinks that require the foaming properties are required to have good foaming properties and foam stability, but the techniques of PATENT LITERATURES 1 to 4 are not necessarily sufficient and there is room for improvement. Therefore, at present, when trying to impart more foaming properties and foam stability, it is necessary to separately prepare the foaming agents such as soybean peptide described in PATENT LITERATURE 2 and foam stabilizers such as water-soluble soybean polysaccharides described in PATENT LITERATURES 1 and 3 and combine them, but it is difficult to say that it is efficient in terms of cost and work. Therefore, if a single material can provide a sufficiently good foaming agent and foam stabilizer, it is advantageous in terms of cost and work.

In recent years, the foods and drinks that require the foaming properties are often required to have fineness of foam to be generated, from the viewpoint of good texture and the like in addition to the foaming properties and the foam stability, and there is also a demand for a material that can provide the fineness of foam.

However, in the technique of PATENT LITERATURE 5, a problem remains that an amount of addition to provide a sufficient foam-retaining effect is large, and thus a flavor peculiar to soybeans impairs flavor of beverage itself, which greatly limits usage.

As a means to solve a problem of flavor in the use of soybean dietary fiber, there is PATENT LITERATURE 6, but the pea polysaccharides produced by the conventional technique does not have a sufficient foam retention function, and there is room for improvement.

In recent years, there are also problems such as allergens, and there are many cases where foaming and foam stabilizing functions other than soybean raw materials are required. Accordingly, an object of the present invention is to provide a material that is allergen-free, has a good flavor, and can provide good foaming properties and foam stability by using a pea raw material.

### SOLUTION TO PROBLEMS

The present inventors have made intensive studies to solve the above problems. As a result, the present inventors have found that in the heat-treated product obtained by heat-treating the pea-derived raw material with adjusted crude protein content and sugar content under high temperature acidic conditions, a specific fraction having a weight average molecular weight of 3000 to 15000 when measuring molecular weight distribution at a wavelength of 220 nm by gel filtration HPLC is present in a ratio of a certain amount or more, which imparts good foaming properties, foam stability, and fineness of foam to beverages and the like, and have completed the present invention.

That is, the present invention is as follows.
(1) A heat-treated product of pea-derived raw material, in which
   A) a crude protein content is 14 to 35 wt% and a sugar content is 40 to 85 wt% in terms of dry matter, and
   B) in molecular weight distribution at a wavelength of 220 nm measured by gel filtration HPLC, a ratio of a peak area of a fraction having a weight average molecular weight of 3000 to 15000 to a total peak area is 35% or more.
(2) The heat-treated product of pea-derived raw material according to (1), in which in A), the crude protein content is 17 to 30 wt% in terms of dry matter.
(3) The heat-treated product of pea-derived raw material according to (1), in which in A), the sugar content is 45 to 70 wt% in terms of dry matter.
(4) The heat-treated product of pea-derived raw material according to (1), in which in B), the ratio of the peak area of the fraction having a weight average molecular weight of 3000 to 15000 to the total peak area is 40% or more.
(5) The heat-treated product of pea-derived raw material according to (2), in which in B), the ratio of the peak area of the fraction having a weight average molecular weight of 3000 to 15000 to the total peak area is 40% or more.
(6) The heat-treated product of pea-derived raw material according to (3), in which in B), the ratio of the peak area of the fraction having a weight average molecular weight of 3000 to 15000 to the total peak area is 40% or more.
(7) A foaming agent containing the heat-treated product of pea-derived raw material according to (1) as an active ingredient.
(8) A foaming agent containing the heat-treated product of pea-derived raw material according to (2) as an active ingredient.
(9) A foaming agent containing the heat-treated product of pea-derived raw material according to (3) as an active ingredient.
(10) A method for producing a heat-treated product of pea-derived raw material, in the heat-treated product, A) a crude protein content is 14 to 35 wt% and a sugar content is 40 to 85 wt% in terms of dry matter, and B) in molecular weight distribution at a wavelength of 220 nm measured by gel filtration HPLC, a ratio of a peak area of a fraction having a weight average molecular weight of 3000 to 15000 to a total peak area is 35% or more, the method including:
   heating a pea-derived raw material having a crude protein content of 20 to 45 wt% and a sugar content of 30 to 70 wt% in terms of dry matter under conditions of more than 100°C and 160°C or less and more than pH 4 and pH 6 or less to obtain a slurry; and
   adjusting the crude protein content to 14 to 35 wt% and the sugar content to 40 to 85 wt% in terms of dry matter in a filtrate after solid-liquid separation of the slurry.
(11) The method for producing the heat-treated product of pea-derived raw material according to (10), using the pea-derived raw material having a crude protein content of 30 to 45 wt% in terms of dry matter.
(12) The method for producing the heat-treated product of pea-derived raw material according to (10), using the pea-derived raw material having a sugar content of 35 to 65 wt% in terms of dry matter.
(13) The method for producing the heat-treated product of pea-derived raw material according to (11), using the pea-derived raw material having a sugar content of 35 to 65 wt% in terms of dry matter.

### EFFECTS OF INVENTION

By adding the heat-treated product of the present invention to the foods and drinks, excellent foaming properties, foam stability, and fineness of foam can be imparted.

### BRIEF DESCRIPTION OF DRAWINGS

Fig. 1 is a diagram illustrating a molecular weight of a heat-treated product A when measuring molecular weight distribution at a wavelength of 220 nm by gel filtration HPLC.
Fig. 2 is a diagram illustrating a molecular weight of a heat-treated product B when measuring molecular weight distribution at a wavelength of 220 nm by gel filtration HPLC.
Fig. 3 is a diagram illustrating a molecular weight of a heat-treated product C when measuring molecular weight distribution at a wavelength of 220 nm by gel filtration HPLC.
Fig. 4 is a diagram illustrating a molecular weight of a heat-treated product D when measuring molecular weight distribution at a wavelength of 220 nm by gel filtration HPLC.
Fig. 5 is a diagram illustrating a molecular weight of a heat-treated product E when measuring molecular weight distribution at a wavelength of 220 nm by gel filtration HPLC.
Fig. 6 is a diagram illustrating a molecular weight of a heat-treated product F when measuring molecular weight distribution at a wavelength of 220 nm by gel filtration HPLC.

### DESCRIPTION OF EMBODIMENTS

### (Heat-treated product of pea-derived raw material)

A heat-treated product of pea-derived raw material of the present invention can impart excellent foaming properties and foam stability, and can impart fineness of foam to beverages such as beer.

The heat-treated product is characterized by the following A) and B).
A) a crude protein content is 14 to 35 wt% and a sugar content is 40 to 85 wt% in terms of dry matter, and
B) in molecular weight distribution at a wavelength of 220 nm measured by gel filtration HPLC, a ratio of a peak area of a fraction having a weight average molecular weight of 3000 to 15000 to a total peak area is 35% or more.

### (Pea-derived raw material)

The heat-treated product of the present invention is produced using the pea-derived raw material. As the pea-derived raw material, pea residue prepared from peas is suitable. Industrially, the pea residue is a fraction (residue) obtained by removing an outer skin of pea seed, pulverizing cotyledons by dry or wet grinding, and then separating and removing starch.

In the present invention, it is necessary to use a pea raw material having a high crude protein content, from which protein has not been removed. By using such a pea-derived raw material, it is possible to obtain the heat-treated product of pea-derived raw material having high foaming power and foam stability.

For this reason, it is necessary that the pea-derived raw material has a crude protein content of 20 to 45 wt% and a sugar content of 30 to 70 wt% in terms of dry matter. The crude protein content of the pea-derived raw material is preferably 23 to 45 wt%, more preferably 25 to 45 wt%, and still more preferably 28 to 45 wt%, 30 to 45 wt%, and 30 to 40 wt% in terms of dry matter.

Further, the sugar content of the pea-derived raw material is preferably 33 to 68 wt%, more preferably 35 to 65 wt%, and still more preferably 38 to 63 wt% in terms of dry matter.

Furthermore, in order to obtain the pea-derived raw material as described above, it is desirable to use the pea-derived raw material that has been destarched to fall within the above range as a raw material.

### (Method for producing heat-treated product of pea-derived raw material)

Water is added to the pea-derived raw material, pH is adjusted to more than 4 and 6 or less, and preferably more than 4 and 5 or less, using an acid such as hydrochloric acid, and the mixture is heated at a temperature of more than 100°C and 160°C or less, preferably more than 100°C and 130°C or less, and more preferably 120°C or more and 130°C or less, for about 30 to 240 minutes, and preferably 60 to 210 minutes, to obtain a slurry.

After heat treatment, the slurry is subjected to solid-liquid separation to obtain a filtrate (note that in the present invention, liquid after the solid-liquid separation may be referred to as a supernatant). The filtrate may or may not be purified so that the crude protein content and the sugar content after purification are respectively 14 to 35 wt% and 40 to 85 wt% in terms of dry matter. Thereafter, the heat-treated product of the present invention can be obtained by sterilizing as necessary and drying such as freeze-drying or spray-drying.

### (Crude protein content)

In the present invention, the crude protein content in the heat-treated product is expressed in terms of dry matter by determining a total nitrogen content in a sample by the Kjeldahl method, multiplying it by a coefficient of 6.25, to measure it as a percentage of the sample.

The crude protein content of the heat-treated product of the present invention is 14 to 35 wt% in terms of dry matter. A lower limit value can be preferably selected to be 16 wt% or more or 17 wt% or more. In addition, an upper limit value can be preferably selected to be 33 wt% or less or 30 wt% or less.

Preferred aspects include, for example, 14 to 33 wt%, 14 to 30 wt%, 16 to 35 wt%, 16 to 33 wt%, 16 to 30 wt%, 17 to 35 wt%, 17 to 33 wt%, or 17 to 30 wt%.

### (Sugar content)

In the present invention, the sugar content in the heat-treated product is 40 to 85 wt% in terms of dry matter. A lower limit value can be preferably selected to be 42 wt% or more or 45 wt% or more. In addition, an upper limit value can be preferably selected to be 80 wt% or less, 75 wt% or less, 70 wt% or less, or 65 wt% or less. Preferred aspects include, for example, 40 to 80 wt%, 40 to 75 wt%, 40 to 70 wt%, 40 to 65 wt%, 42 to 85 wt%, 42 to 80 wt%, 42 to 75 wt%, 42 to 70 wt%, 42 to 65 wt%, 45 to 85 wt%, 45 to 80 wt%, 45 to 75 wt%, 45 to 70 wt%, or 45 to 65 wt%.

### (Measurement of molecular weight distribution by gel filtration chromatography)

Although gel filtration chromatography conditions are not particularly limited, the molecular weight distribution can be measured, for example, by the following method. HPLC is preferably used as gel filtration chromatography. Typical measurement conditions are shown below, but conditions under which the molecular weight distribution can be measured with the same degree of precision and accuracy as the conditions shown below can also be employed.

### - Measurement conditions

Column: HPLC columns TSK gel G3000PWXL (ϕ7.2mm×30cm) and TSK gel G2000PWXL (ϕ7.2mm×30cm) manufactured by Tosoh Corporation are used in combination
Eluent: 1%SDS 1.17%NaCl 50 mM phosphate buffer (pH 7.0)
Specimen sample: dissolved to 1 wt% in the eluent, filtered through a 0.45 µm filter, then applied to the column.
Column temperature:
   Flow rate: 0.4 ml/min
   Detection: wavelength 220nm
   Molecular weight markers: Thyroglobulin, γ-globulin, Albumin, Peroxidase, Myoglobin, Cytchrome C, Insulin, reduced glutathione, or p-aminobenzoic acid is used.

In the present invention, the ratio of the fraction having a weight average molecular weight of 3000 to 15000 is important. That is, in the molecular weight distribution at the wavelength of 220 nm measured by gel filtration HPLC, the ratio of the peak area of the fraction having a weight average molecular weight of 3000 to 15000 to the total peak area must be 35% or more. The ratio is preferably 40% or more, and more preferably 45% or more.

### (Foaming agent)

A foaming agent of the present invention is a foaming agent having as an active ingredient the heat-treated product of pea-derived raw material characterized by the following A) and B). That is,
A) a crude protein content is 14 to 35 wt% and a sugar content is 40 to 85 wt% in terms of dry matter, and
B) in molecular weight distribution at a wavelength of 220 nm measured by gel filtration HPLC, a ratio of a peak area of a fraction having a weight average molecular weight of 3000 to 15000 to a total peak area is 35% or more.

The foaming agent of the present invention can impart good foaming properties, foam stability, and fineness of foam to foods and drinks.

The foaming agent may include only the heat-treated product of pea-derived raw material, or may further contain emulsifiers such as monoglycerides and other various substances having foaming effects and foam stabilizing effects. The content of the heat-treated product of pea-derived raw material in the foaming agent may be 10 to 100 wt%, preferably 50 to 100 wt%, and more preferably 90 to 100 wt%.

### (Foods and drinks)

Examples of the foods and drinks used in the present invention include meringue, confectionery using meringue, frozen desserts such as frozen, sparkling wine, beer, and beer-taste beverages such as low-malt beer, third beer (beverage made from ingredients other than malt, or mixed with other alcoholic beverages in low-malt beer in order to be treated as not belonging to beer or low-malt beer under the Japanese Liquor Tax Law), fourth beer (beverage added with distilled liquor (liqueur) made from barley while increasing a ratio of malt to nearly 50% in order to be treated as not belonging to beer or low-malt beer under the Japanese Liquor Tax Law), and fermented or non-fermented non-alcoholic beer.

The heat-treated product of the present invention is preferably used for beverages among foods and drinks, and is preferably used for beer-taste beverages such as low-malt beer, third beer, fourth beer, and fermented or non-fermented non-alcoholic beer in terms of being able to further enhance the effect on foam such as fineness of foam among beverages. Fermented or non-fermented non-alcoholic beer is more preferred, and non-fermented non-alcoholic beer is still more preferred.

An amount of the heat-treated product or the foaming agent of the present invention added to the foods or drinks is, for example, in the case of a beverage, preferably 0.001 to 1 wt%, and more preferably 0.005 to 0.5 wt%, as the heat-treated product, based on a weight of the beverage.

In the case of a frozen dessert, the heat-treated product is preferably 0.005 to 10 wt%, and more preferably 0.01 to 5 wt% based on a weight of the frozen dessert. In the case of meringue, the heat-treated product is preferably 0.05 to 5 wt%, and more preferably 0.1 to 3 wt% based on egg white to be used.

### (Beer-taste beverage)

The beer-taste beverage of the present invention is low-malt beer, third beer (beverage made from ingredients other than malt, or mixed with other alcoholic beverages in low-malt beer in order to be treated as not belonging to beer or low-malt beer under the Japanese Liquor Tax Law), fourth beer (beverage added with distilled liquor (liqueur) made from barley while increasing a ratio of malt to nearly 50% in order to be treated as not belonging to beer or low-malt beer under the Japanese Liquor Tax Law), and fermented or non-fermented non-alcoholic beer.

The amount of the heat-treated product or the foaming agent of the present invention added to the beer-taste beverage is preferably 0.001 to 1 wt%, and more preferably 0.005 to 0.5 wt%, as the heat-treated product, based on the weight of the beverage.

In the beer-taste beverage of the present invention, raw materials such as sugars, sugar alcohols, various glycosides such as saponin, flavors, dietary fibers, polysaccharides, peptides such as soybean peptides, acids, and yeast extract can be used in combination.

Examples of the sugars include reducing sugars such as glucose, fructose and maltose, oligosaccharides such as sucrose, various dextrin, and oligosaccharides, and example of the flavors include malt flavor, hop flavor, beer flavor, alcohol flavor, and caramel flavor. The malt flavor is preferred as a flavor that imparts and reinforces the beer flavor. Examples of the acids include organic acids such as citric acid, lactic acid, and tartaric acid, and mineral acids such as hydrochloric acid and phosphoric acid.

Further, hops or hop extracts and bittering agents can be used in combination. The hops or hop extracts refer to hop leaves, ground hops, extracts obtained by extracting them with water or hot water, concentrates and dried matter of the extracts. Further, as the bittering agent, a conventionally known bittering agent selected from bitter substances derived from hops, caffeine, gentian root extract, peptides, theobromine, naringin, quassia extract, absinth extract, redbark cinchona extract, and the like can be used.

### (Method for producing beer-taste beverage)

Production of the beer-taste beverage of the present invention will be described by exemplifying non-fermented non-alcoholic beer.

In the present invention, steps used in production of ordinary non-fermented non-alcoholic beer are employed. As an example, after boiling a primary raw material liquid containing the heat-treated product of the present invention, malt, and the like as raw materials, hop extract and flavors are added and heated again, and fermented alcohol is added if necessary, and then carbon dioxide is added by a carbonation step to prepare the beer-taste beverage. If necessary, precipitate can be separated and removed by filtration, centrifugation or the like in each step. Further, carbonated water may be added after the raw material liquid is prepared in a high concentration. By using a normal soft drink production process, it is possible to easily prepare a beer-taste beverage with a good flavor without having a fermentation facility. It is more desirable to remove the precipitate before the carbonation step or a step of adding the carbonated water, because substances that cause sediments and off-taste can be removed. Note that before the carbonation step and the step of adding the carbonated water, a sterilization operation can also be performed if necessary.

Further, the pH of the beer-taste beverage of the present invention is not particularly limited, but is generally pH 3 to 5. The pH is preferably 3 to 4.5, and more preferably 3 to 4. If the pH is too low, acidic taste may be strong and affect the flavor. Further, if the pH is too high, a bactericidal effect may be reduced to reduce storage stability.

### EXAMPLES

Examples are described below. % in Examples means weight basis. Note that in the following, the heat-treated product of pea-derived raw material is simply referred to as the heat-treated product.

### (Example 1)

15 times an amount of water was added to dry pea residue obtained in a pea starch production step, which has a moisture content of 7%, and a crude protein content of 36% and a sugar content of 39% in terms of dry matter, the pH was adjusted to 4.7 with hydrochloric acid, and the mixture was heat-extracted at 128°C for 2.5 hours. The pH of the heat-extracted slurry after cooling was 4.7. After adjusting the pH of the collected slurry to 5.0 with sodium hydroxide, it was centrifuged (10000×G, 30 minutes) to separate the supernatant and the precipitate. The supernatant was desalted by electrodialysis and then freeze-dried to obtain a heat-treated product A.

### (Example 2)

15 times an amount of water was added to dry pea residue obtained in a pea starch production step, which has a moisture content of 6%, and a crude protein content of 24% and a sugar content of 61% in terms of dry matter, the pH was adjusted to 4.7 with hydrochloric acid, and the mixture was heat-extracted at 128°C for 2.5 hours. The pH of the heat-extracted slurry after cooling was 4.9. After adjusting the pH of the collected slurry to 5.0 with sodium hydroxide, it was centrifuged (10000×G, 30 minutes) to separate the supernatant and the precipitate. The supernatant was desalted by electrodialysis and then freeze-dried to obtain a heat-treated product B.

### (Example 3)

15 times an amount of water was added to dry pea residue obtained in a pea starch production step, which has a moisture content of 7%, and a crude protein content of 36% and a sugar content of 39% in terms of dry matter, the pH was adjusted to 4.7 with hydrochloric acid, and the mixture was heat-extracted at 124°C for 1.5 hours. The pH of the heat-extracted slurry after cooling was 4.7. After adjusting the pH of the collected slurry to 5.0 with sodium hydroxide, it was centrifuged (10000×G, 30 minutes) to separate the supernatant and the precipitate. The supernatant was desalted by electrodialysis and then freeze-dried to obtain a heat-treated product C.

### (Example 4)

15 times an amount of water was added to dry pea residue obtained in a pea starch production step, which has a moisture content of 6%, and a crude protein content of 24% and a sugar content of 61% in terms of dry matter, the pH was adjusted to 4.7 with hydrochloric acid, and the mixture was heat-extracted at 124°C for 1.5 hours. The pH of the heat-extracted slurry after cooling was 4.9. After adjusting the pH of the collected slurry to 5.0 with sodium hydroxide, it was centrifuged (10000×G, 30 minutes) to separate the supernatant and the precipitate. The supernatant was desalted by electrodialysis and then freeze-dried to obtain a heat-treated product D.

### (Comparative Example 1)

15 times an amount of water was added to dry pea residue obtained in a pea protein production step, which has a moisture content of 8%, and a crude protein content of 12% and a sugar content of 72% in terms of dry matter, the pH was adjusted to 4.7 with hydrochloric acid, and the mixture was heat-extracted at 128°C for 2.5 hours. The pH of the heat-extracted slurry after cooling was 4.6. After adjusting the pH of the collected slurry to 5.0 with sodium hydroxide, it was centrifuged (10000×G, 30 minutes) to separate the supernatant and the precipitate. The supernatant was desalted by electrodialysis and then freeze-dried to obtain a heat-treated product E.

### (Comparative Example 2)

15 times an amount of water was added to dry pea residue obtained in a pea protein production step, which has a moisture content of 8%, and a crude protein content of 12% and a sugar content of 72% in terms of dry matter, the pH was adjusted to 4.7 with hydrochloric acid, and the mixture was heat-extracted at 124°C for 1.5 hours. The pH of the heat-extracted slurry after cooling was 4.7. After adjusting the pH of the collected slurry to 5.0 with sodium hydroxide, it was centrifuged (10000×G, 30 minutes) to separate the supernatant and the precipitate. The supernatant was desalted by electrodialysis and then freeze-dried to obtain a heat-treated product F.

Table 1 shows the sugar content, the crude protein content, and crude ash content of heat-treated products obtained in Examples 1 to 4 and Comparative Examples 1 and 2. The sugar content was measured by a phenol-sulfuric acid method, and the crude ash content was measured by an ashing method. The ratio of the fraction having a weight average molecular weight of 3000 to 15000 was determined by molecular weight distribution measurement using gel filtration chromatography.

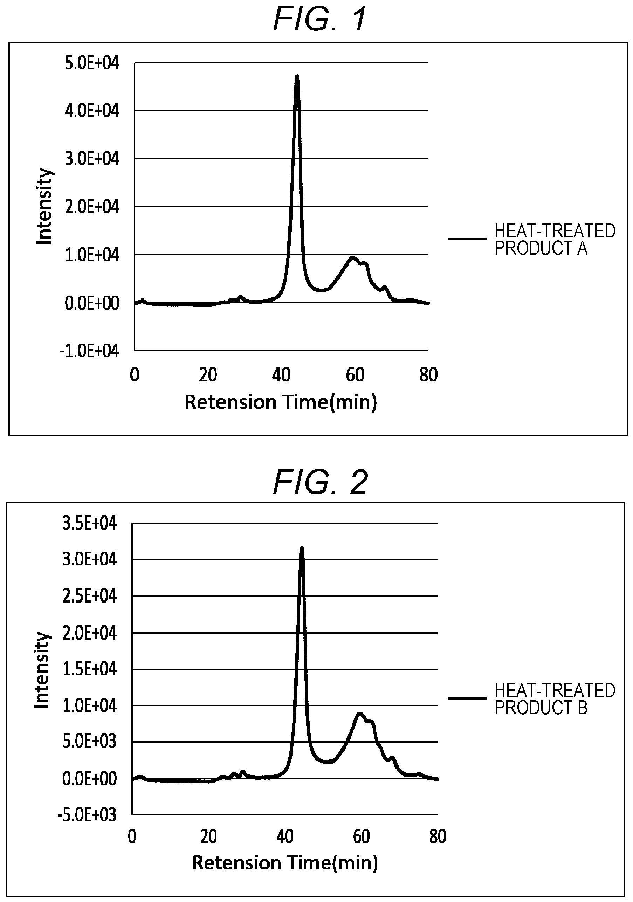

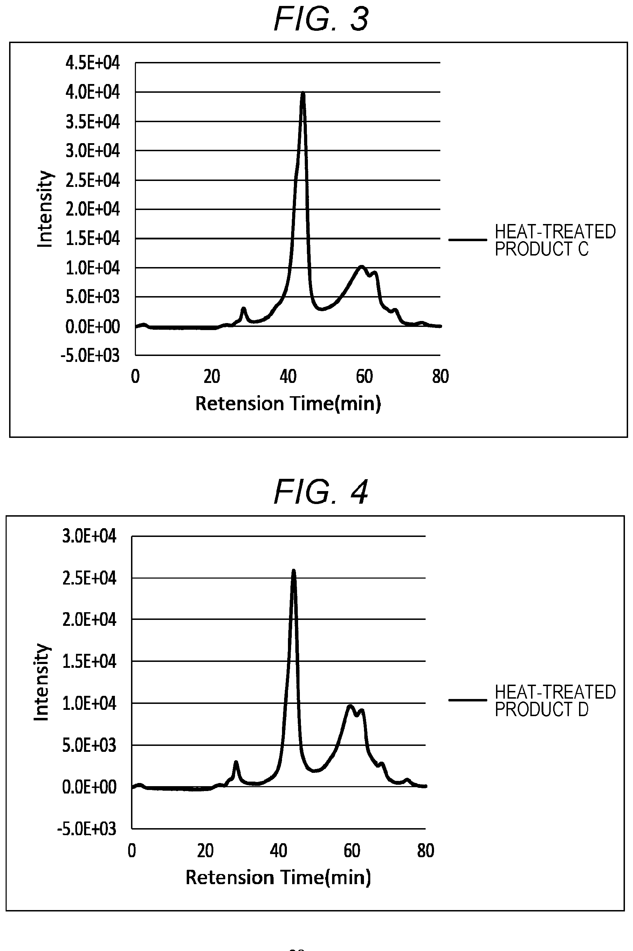

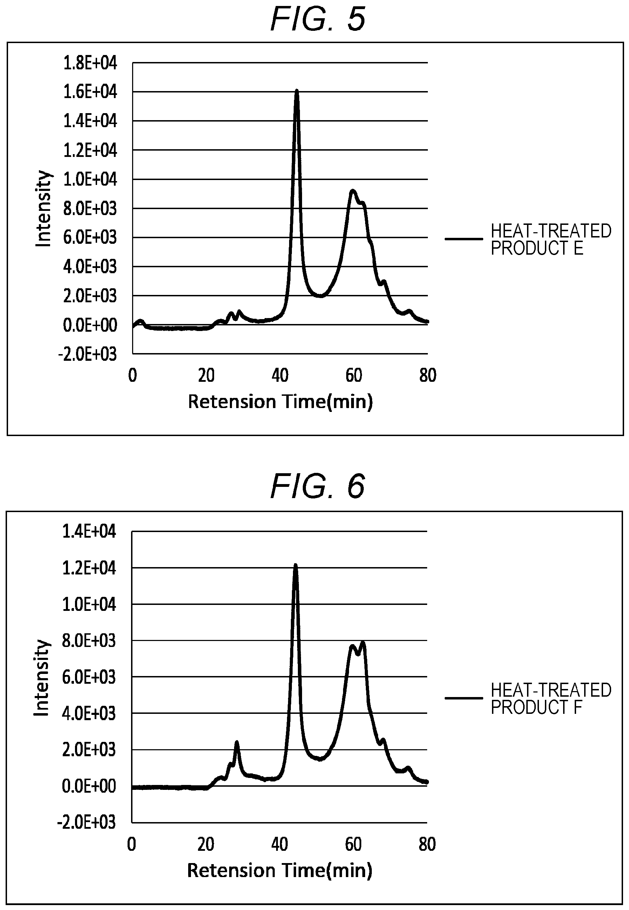

Figs. 1 to 6 show charts of the heat-treated products A to F when molecular weight distributions were measured at a wavelength of 220 nm by gel filtration HPLC.

**(Table 1) Analytical value of heat-treated product**

| | Example 1 | Example 2 | Example 3 | Example 4 | Comparative Example 1 | Comparative Example 2 |
|---|---|---|---|---|---|---|
| | Heat-treated product A | Heat-treated product B | Heat-treated product C | Heat-treated product D | Heat-treated product E | Heat-treated product F |
| Sugar content (% in terms of dry matter) | 52.9 | 61.8 | 48.5 | 62.9 | 70.1 | 69.9 |
| Crude protein content (% in terms of dry matter) | 26.3 | 18.1 | 30.7 | 18.3 | 10.9 | 10.5 |
| Crude ash content (% in terms of dry matter) | 6.1 | 5 | 5.7 | 4.6 | 2.9 | 3.5 |
| Ratio of fraction having a weight average molecular weight of 3000 to 15000 (%) | 53.4 | 46.5 | 46.1 | 41.9 | 32.5 | 30.9 |

Next, the presence or absence of an effect of the present invention on various foods and drinks was checked in order to check whether the heat-treated products A to D that satisfy requirements of the present invention impart good foaming properties, foam stability, and fineness of foam to the foods and drinks.

### (Evaluation of foaming properties and foam stability in aqueous solution)

The heat-treated products A to F were respectively dissolved in water to prepare 0.3% aqueous solutions. 30 ml of each of these aqueous solutions was placed in a 100 ml screw tube, covered with a lid so as not to leak, and shaken at 280 rpm for 1 minute in a height direction of the tube. After shaking, the screw tube was allowed to stand still, and a thickness of a foam layer was measured 1 minute and 15 minutes after standing.

A foam thickness of 18 mm or more was evaluated as Excellent, 15 mm or more and less than 18 mm as Good, 10 mm or more and less than 15 mm as Average, and less than 10 mm as Poor. Those with an evaluation of Excellent or Good were regarded as acceptable. Table 2 shows the results.

**(Table 2)**

| | Thickness of foam (mm) | | Evaluation |
|---|---|---|---|
| | After 1 minute | After 15 minutes | |
| Additive-free | 0 | 0 | Poor |
| Heat-treated product A | 21.5 | 19 | Excellent |
| Heat-treated product B | 19.5 | 15.5 | Good |
| Heat-treated product C | 21 | 19 | Excellent |
| Heat-treated product D | 18.5 | 15 | Good |
| Heat-treated product E | 14 | 13 | Average |
| Heat-treated product F | 14 | 12 | Average |

The heat-treated products A to D all had higher foam stability than the heat-treated products E and F.

### (Evaluation of foaming properties and foam quality in non-alcoholic beer)

### (Example 5, Comparative Examples 3 to 5)

To 100 ml of commercially available non-alcoholic beer, 500 mg of a 20% aqueous solution of the heat-treated product A was added (concentration of the heat-treated product A in the beverage was 0.1%), and the mixture was gently stirred. This was poured into a glass, allowed to stand still for 2 minutes, and compared by a method described below (Example 5). The non-alcoholic beer using the heat-treated product E instead of the heat-treated product A (Comparative Example 3), and the non-alcoholic beer to which nothing was added (Comparative Example 4) as a control of the heat-treated product A were compared under the same conditions.

In addition, a commercially available beer ("Premium Malt's" manufactured by Suntory Spirits Ltd.) to which the heat-treated products were not added was evaluated in the same manner as in Example 5 (Comparative Example 5).

### (Sensory evaluation method)

For the evaluation of foam quality when drinking, a sensory evaluation was performed by a well-trained panel of 10 persons according to the following. Ten panelists evaluated each item on a scale of 1 to 5, and Table 4 shows the number of persons who gave each evaluation score. An average value of evaluation scores was calculated from the number of persons with each evaluation score. When the average value of evaluation scores for each item was 4.0 points or more, it was determined to be acceptable. Table 3 shows the results.

### (Fineness of foam)

5 points: clearly finer foam compared to the control
4 points: slightly finer foam compared to the control
3 points: no difference compared to the control
2 points: slightly finer foam in the control
1 point: finer foam in the control

### (Amount of foam generated when poured into container)

5 points: clearly more foam compared to the control
4 points: slightly more foam compared to the control
3 points: no difference compared to the control
2 points: slightly more foam in the control
1 point: more foam in the control

### (Beer-like foam feeling when drinking)

5 points: clearly more beer-like foam feeling compared to the control
4 points: slightly more beer-like foam feeling compared to the control
3 points: no difference compared to the control
2 points: more beer-like foam feeling in the control
1 point: clearly more beer-like foam feeling in the control

**(Table 3)**

| | | Number of respondents | | | | | Average value of evaluation scores |
|---|---|---|---|---|---|---|---|
| Example 5 | Evaluation score | 1 point | 2 points | 3 points | 4 points | 5 points | |
| | Fineness of foam | 0 | 0 | 0 | 3 | 7 | 4.7 |
| | Amount of generated foam | 0 | 0 | 0 | 2 | 8 | 4.8 |
| | Beer-like foam feeling | 0 | 0 | 0 | 1 | 9 | 4.9 |
| Comparative Example 3 | Evaluation score | 1 point | 2 points | 3 points | 4 points | 5 points | |
| | Fineness of foam | 0 | 1 | 4 | 3 | 2 | 3.6 |
| | Amount of generated foam | 0 | 2 | 5 | 2 | 1 | 3.2 |
| | Beer-like foam feeling | 0 | 3 | 3 | 3 | 1 | 3.2 |
| Comparative Example 4 | Evaluation score | 1 point | 2 points | 3 points | 4 points | 5 points | |
| | Fineness of foam | 1 | 5 | 4 | 0 | 0 | 2.3 |
| | Amount of generated foam | 5 | 3 | 2 | 0 | 0 | 1.7 |
| | Beer-like foam feeling | 5 | 5 | 0 | 0 | 0 | 1.5 |
| Comparative Example 5 | Evaluation score | 1 point | 2 points | 3 points | 4 points | 5 points | |
| | Fineness of foam | 0 | 0 | 0 | 1 | 9 | 4.9 |
| | Amount of generated foam | 0 | 0 | 1 | 3 | 6 | 4.5 |
| | Beer-like foam feeling | 0 | 0 | 0 | 1 | 9 | 4.9 |

The non-alcoholic beer to which the heat-treated product A was added (Example 5) was highly rated with an average value of evaluation scores of 4.0 or more, and had better foaming properties, fineness of foam, and beer-like foam feeling compared to additive-free non-alcoholic beer.

In addition, as a result of comparing the non-alcoholic beer to which the heat-treated product A was added with a commercially available fermented beer (Comparative Example 5) having good foaming properties and fineness of foam, it was confirmed that the non-alcoholic beer to which the heat-treated product A was added had the same level of foaming properties, fineness of foam, and foam feeling when drinking as those of commercially available fermented beer (Example 5, Comparative Example 5).

On the other hand, when the heat-treated product E produced using a raw material having a low protein content was added as in Comparative Example 3, the foaming properties, fineness of foam, and beer-like foam feeling were better than when nothing was added (Comparative Example 4), but the results were inferior to when the heat-treated product A was added in all items.

From the above results, it was confirmed that the heat-treated product of pea-derived raw material, in which A) a crude protein content is 14 to 35 wt% and a sugar content is 40 to 85 wt% in terms of dry matter, and B) in molecular weight distribution at a wavelength of 220 nm measured by gel filtration HPLC, a ratio of a peak area of a fraction having a weight average molecular weight of 3000 to 15000 to a total peak area is 35% or more, imparts good foaming properties, foam stability, and fineness of foam to the foods and drinks.

## Claims

1. A heat-treated product of pea-derived raw material, wherein
A) a crude protein content is 14 to 35 wt% and a sugar content is 40 to 85 wt% in terms of dry matter, and
B) in molecular weight distribution at a wavelength of 220 nm measured by gel filtration HPLC, a ratio of a peak area of a fraction having a weight average molecular weight of 3000 to 15000 to a total peak area is 35% or more.

2. The heat-treated product of pea-derived raw material according to claim 1, wherein in A), the crude protein content is 17 to 30 wt% in terms of dry matter.

3. The heat-treated product of pea-derived raw material according to claim 1, wherein in A), the sugar content is 45 to 70 wt% in terms of dry matter.

4. The heat-treated product of pea-derived raw material according to claim 1, wherein in B), the ratio of the peak area of the fraction having a weight average molecular weight of 3000 to 15000 to the total peak area is 40% or more.

5. The heat-treated product of pea-derived raw material according to claim 2, wherein in B), the ratio of the peak area of the fraction having a weight average molecular weight of 3000 to 15000 to the total peak area is 40% or more.

6. The heat-treated product of pea-derived raw material according to claim 3, wherein in B), the ratio of the peak area of the fraction having a weight average molecular weight of 3000 to 15000 to the total peak area is 40% or more.

7. A foaming agent comprising the heat-treated product of pea-derived raw material according to claim 1 as an active ingredient.

8. A foaming agent comprising the heat-treated product of pea-derived raw material according to claim 2 as an active ingredient.

9. A foaming agent comprising the heat-treated product of pea-derived raw material according to claim 3 as an active ingredient.

10. A method for producing a heat-treated product of pea-derived raw material, in the heat-treated product, A) a crude protein content is 14 to 35 wt% and a sugar content is 40 to 85 wt% in terms of dry matter, and B) in molecular weight distribution at a wavelength of 220 nm measured by gel filtration HPLC, a ratio of a peak area of a fraction having a weight average molecular weight of 3000 to 15000 to a total peak area is 35% or more, the method comprising:
heating a pea-derived raw material having a crude protein content of 20 to 45 wt% and a sugar content of 30 to 70 wt% in terms of dry matter under conditions of more than 100°C and 160°C or less and more than pH4 and pH6 or less to obtain a slurry; and
adjusting the crude protein content to 14 to 35 wt% and the sugar content to 40 to 85 wt% in terms of dry matter in a filtrate after solid-liquid separation of the slurry.

11. The method for producing the heat-treated product of pea-derived raw material according to claim 10, using the pea-derived raw material having a crude protein content of 30 to 45 wt% in terms of dry matter.

12. The method for producing the heat-treated product of pea-derived raw material according to claim 10, using the pea-derived raw material having a sugar content of 35 to 65 wt% in terms of dry matter.

13. The method for producing the heat-treated product of pea-derived raw material according to claim 11, using the pea-derived raw material having a sugar content of 35 to 65 wt% in terms of dry matter.
